# EUROPÄISCHE PATENTSCHRIFT

(11) **EP 1 580 856 B1**
(45) Veröffentlichungstag und Bekanntmachung des Hinweises auf die Patenterteilung: **20.06.2012**
(21) Anmeldenummer: 04405185.2
(22) Anmeldetag: 25.03.2004
(51) Int. Cl.: H02B 5/06

(54) **Hochspannungsschaltanlage in Freiluftbauweise**
High voltage switchgear in AIS configuration
Poste à haute tension aérien

(43) Veröffentlichungstag der Anmeldung: 28.09.2005
(73) Patentinhaber: ABB Technology AG, 8050 Zürich (CH)
(72) Erfinder: Landert, Hans-Peter, 8610 Uster (CH); Fuechsle, Dieter, 5304 Endingen (CH)
(74) Vertreter: ABB Patent Attorneys

(56) Entgegenhaltungen:
- EP-A- 1 168 551
- DE-A- 19 904 402
- US-A1- 2004 027 791
- US-A1- 2004 037 025

## Beschreibung

### TECHNISCHES GEBIET

Bei der Erfindung wird ausgegangen von einer Hochspannungsschaltanlage nach dem Oberbegriff von Patentanspruch 1. Diese Schaltanlage weist mindestens eine in Freiluftbauweise ausgeführte Sammelschiene auf und mindestens zwei mit der Sammelschiene verbindbare Schaltfelder. In einem der Schaltfelder ist eine gekapselte gasisolierte Schaltungsanordung in Modulbauweise vorgesehen, die mindestens ein als Trennschalter und mindestens ein als Leistungsschalter ausgeführtes Modul enthält.

Solche häufig als Hybridanlage bezeichnete Schaltanlage weist ein Schaltfelder überspannendes Abspanngerüst auf, an dem im allgemeinen ein Sammelschienensystem in Freiluftbauweise sowie Abzweige, wie Einspeisungen und Verbraucherabgänge, abgestützt sind. Mindestens eines der Schaltfelder enthält im allgemeinen eine ein- oder mehrphasig gekapselte, gasisolierte Schaltungsanordnung in Modulbauweise, welche je nach Konfiguration eine mehr oder weniger hoch verfügbare Verbindung zwischen dem Sammelschienensystem und den Abzweigen oder zwischen zwei der Sammelschienen des Sammelschienensystems gewährleistet.

Die Module der gekapselten Schaltungsanordnung sind mit einem Isoliergas, beispielsweise Stickstoff, Luft, Schwefelhexafluorid (SF₆) allein oder in Mischung, von bis zu einigen bar Druck gefüllt und werden im Betrieb der Anlage typischerweise mit Hochspannungen von mehr als 100 kV belastet. Typische Module sind als Leistungs-, als Trenn-, als Erdungs-, als kombinierter Trenn- und Erdungsschalter, als Strom- und/oder Spannungsmessgerät oder als Strom- oder Spannungsbegrenzer ausgebildet.

Die Schaltanlage der eingangs genannten Art zeichnet sich gegenüber ausschliesslich in Freilufttechnologie ausgeführten Schaltanlagen wegen der gekapselt ausgebildeten Schaltungsanordnung durch eine hohe Verfügbarkeit über einen langen Zeitraum und durch einen geringen Platzbedarf aus.

### STAND DER TECHNIK

Mit dem Oberbegriff nimmt die Erfindung auf einen Stand der Technik von Schaltanlagen Bezug, wie er etwa in DE 29 29 054 A1, DE 100 11 888 A1 oder US 2004/0027791 A1 beschrieben ist. Die aus diesem Stand der Technik vorbekannten Schaltanlagen weisen jeweils ein Sammelschienensystem auf, welches mindestens eine in Freiluftbauweise ausgeführte Sammelschiene enthalten, sowie Abzweigschaltfelder, welche jeweils mit einer gasisolierten Abzweigschaltung und mit einem an Freiluft geführten Abgang versehen sind. Die gasisolierten Schaltungsanordnungen sind gemäss herkömmlicher Technologie ein- oder dreiphasig gekapselt ausgeführt, daher weisen diese Anordnungen gegenüber entsprechend konfigurierten Schaltungsanordnungen in Freiluftbauweise eine hohe Verfügbarkeit auf. Bei einer Revision einer dieser Schaltungsanordnungen ist jedoch eine längere Ausfallzeit einzuplanen, ganz im Unterschied zu einer vergleichbaren Schaltungsanordnung in Freiluftbauweise, bei der zwar häufiger Revisionen vorzunehmen sind, eine einzelne Revision jedoch nur einen kurzen Zeitraum benötigt, da defekte Komponenten in Freiluftbauweise relativ rasch ausgewechselt werden können.

### DARSTELLUNG DER ERFINDUNG

Die Erfindung, wie sie in den Patentansprüchen definiert ist, löst die Aufgabe, eine Schaltanlage der eingangs genannten Art anzugeben, welche mit geringen Kosten erstellt werden kann, und sich dennoch durch eine hohe Verfügbarkeit auszeichnet.

Bei der Schaltanlage nach der Erfindung ist zwischen einem Trenn- und einem Leistungsschaltermodul der gekapselten Schaltungsanordnung ein eine Querdemontage mindestens eines der beiden Schaltermodule ermöglichendes Montagemodul angeordnet. Daher kann eine stark beanspruchte Komponente der gekapselten Schaltungsanordnung, nämlich das Trenn- oder das Leistungsschaltermodul, ohne die Position der anderen Komponente verändern zu müssen, durch Querausbau aus der Anlage entfernt werden. Nach Austausch der ausgebauten Komponente kann so innerhalb weniger Stunden die volle Verfügbarkeit der Anlage rasch und kostengünstig wiederhergestellt werden. Lange Ausfallzeiten - wie bei herkömmlich konzipierten gasisolierten Schaltungsanordnungen - werden so vermieden. Dadurch, dass einzelne Komponenten selektiv aus der typischerweise mit einem Abzweig verbundenen Schaltungsanordnung ausgebaut werden können, muss daher im allgemeinen weder ein anderer Abzweig des betroffenen Schaltfelds noch eine die gesamte Anlage betreffende Sammelschiene abgeschaltet werden. Durch geeignet angeordnete Erdungsvorrichtungen können leicht alle Sicherheitsabstände eingehalten werden. Beim Austausch der zu ersetzende Komponente sind zusätzliche Schutzmassnahmen entbehrlich.

Weist die Schaltanlage nach der Erfindung mindestens zwei in Freiluftbauweise ausgeführte Sammelschienen auf sowie eine als Querkupplung ausgeführte gekapselte Schaltungsanordnung, bei der ein erstes Trennschaltermodul mit einer ersten der beiden Sammelschienen und ein mit dem Leistungsschaltermodul verbundenes zweites Trennschaltermodul mit der zweiten Sammelschiene verbunden ist, so empfiehlt es sich zwischen dem zweiten Trenn- und dem Leistungsschaltermodul ein eine Querdemontage des Leistungsschalters ermöglichendes zweites Montagemodul anzuordnen. Durch die Verwendung zweier Montagemodule kann der Querausbau des Leistungsschaltermoduls ohne jegliche Verschiebung senkrecht zur Ausbaurichtung erfolgen.

Enthält die Schaltanlage nach der Erfindung mindestens zwei in Freiluftbauweise ausgeführte Sammelschienen und mindestens eine in 1½-Schalterkonfiguration ausgeführte gekapselte Schaltungsanordnung mit drei Leistungsschaltermodulen und zwei Abzweigen, bei der ein erstes und ein zweites Trennschaltermodul nach Art eines T ausgebildet sind, dessen beide Arme jeweils eine Trennschaltstelle aufweisen und dessen Bein einen mit einem der beiden Abzweige verbindbaren Knotenpunkt enthält, so sollte eines der drei Leistungsschaltermodule über ein erstes Montagemodul mit einem ersten Arm des T des ersten Trennschaltermoduls und über ein zweites Montagemodul mit dem ersten Arm des T des zweiten Trennschaltermoduls verbunden sein. Ein selektiver Ausbau dieses Leistungsschaltermoduls in der vergleichsweise kompliziert aufgebauten 1½-Schaltungsanordnung ist dann gewährleistet. Die Selektivität und damit auch die Verfügbarkeit werden erhöht, wenn der zweite Arm des T des ersten Trennschaltermoduls über ein drittes Montagemodul mit dem zweiten der drei Leistungsschaltermodule und der zweite Arm des T des zweiten Trennschaltermoduls über ein viertes Montagemodul mit dem dritten Leistungsschaltermodul verbunden ist, bzw. wenn zusätzlich ein fünftes und ein sechstes Montagemodul sowie ein mit der ersten beider Sammelschienen verbundenes drittes und ein mit der zweiten Sammelschiene verbundenes viertes Trennschaltermodul vorgesehen sind, und wenn das fünfte Montagemodul zwischen dem zweiten Leistungsschaltermodul und dem dritten Trennschaltermodul und das sechste Montagemodule zwischen dem dritten Leistungsschaltermodul und dem vierten Trennschaltermodul angeordnet sind.

In einer weiteren Ausführungsform der Schaltanlage nach der Erfindung mit mindestens zwei in Freiluftbauweise ausgeführten Sammelschienen und mit mindestens zwei in voneinander abweichenden Schaltfeldern angeordneten und jeweils mindestens einen Abzweig enthaltenden Schaltungsanordnungen, sollten die Schaltungsanordnungen unterschiedliche Schaltungskonfigurationen aufweisen, und sollte mindestens eine der Schaltungskonfigurationen gekapselt und gasisoliert ausgeführt sein. Dank der platzsparenden Ausbildung der gekapselten, gasisolierten Schaltungsanordnung können so bestehende Freiluftanlagen leicht umgerüstet werden und bestehende Abzweige durch unterschiedlich ausgebildete und/oder angeordnete Schaltungsanordnungen an die Sammelschienen angeschlossen werden, welche je nach Anforderung eine besonders hohe oder nur eine weniger hohe Verfügbarkeit gewährleisten.

Mit Vorteil ist hierbei die gekapselte Schaltungsanordnung in Doppelsammelschienen- oder 1½-Schalterkonfiguration ausgeführt. Falls erforderlich kann auch eine weitere gekapselte Schaltungsanordnung vorgesehen sein. Die erste dieser beiden gekapselten Schaltungsanordnungen kann dann in 1½-Schalterkonfiguration und die zweite in Doppelsammelschienenkonfiguration oder in einer von der ersten gekapselten Schaltungsanordnung abweichenden Bauweise der 1½-Schalterkonfiguration, insbesondere in Längs- oder in U-Bauweise, ausgeführt sein.

Anstelle einer Sammelschiene in Freiluftausführung kann in der Hochspannungsanlage nach der Erfindung auch eine Ringkonfiguration vorgesehen sein. Diese Ringkonfiguration sollte zweckmässigerweise gekapselt ausgeführt und in der gekapselte Schaltungsanordnung enthalten sein. Zur Erhöhung der Verfügbarkeit dieser Ausführungsform der Schaltanlage empfiehlt es sich, die gekapselte Schaltungsanordnung in Ring-Kreuzbauweise auszuführen. In einer Weiterbildung dieser Anlagen kann die gekapselte Schaltungsanordnung zusätzlich einen Doppelsammelschienenabzweig enthalten. Eine Umschaltung unter Last ist dann in diesem Abzweig möglich, wenn der zugeordnete Verbindungsschalter in der Ringkonfiguration geschlossen ist.

### BESCHREIBUNG DER ZEICHNUNGEN

Die Erfindung wird nachstehend anhand von Ausführungsbeispielen erläutert. Es zeigt:
- Fig. 1: ein einpolig dargestelltes Schaltschema einer dreiphasigen Hochspannungsschaltanlage nach der Erfindung mit einer Doppelsammelschiene in Freiluftbauweise sowie mit drei Abzweigfeldern und einem Querkupplungsfeld, jeweils enthaltend eine gekapselte, gasisolierte Schaltungsanordnung in Modulbauweise,
- Fig. 2: eine auf einen Pol des Querkupplungsfeldes geführte Ansicht der Schaltanlage gemäss Fig.1,
- Fig. 3: eine Ansicht des Querkupplungsfeldes gemäss Fig.2 beim Ausbau einer Komponente der gekapselten Schaltungsanordnung,
- Fig.4: ein einpolig dargestelltes Schaltschema einer dreiphasigen Ausführungsform der Schaltanlage nach der Erfindung mit einer Doppelsammelschiene in Freiluftbauweise sowie mit zwei Schaltfeldem, bei denen die gekapselte Schaltungsanordnung jeweils in 1½-Schalterkonfiguration ausgeführt ist,
- Fig.5: eine schematische Darstellung der in der gekapselten Schaltungsanordnung der Anlage gemäss Fig.4 enthaltenen Module,
- Fig.6: ein einpolig dargestelltes Schaltschema einer dreiphasigen Ausführungsform der Schaltanlage nach der Erfindung mit einer Doppelsammelschiene in Freiluftbauweise sowie mit einem Querkupplungsfeld, drei Abzweigfelder in Doppelsammelschienenbauweise und vier Abzweigfelder in 1½-Schalterkonfiguration,
- Fig.7: eine Aufsicht auf ein dreipolig dargestelltes Layout der Schaltanlage nach Fig.6,
- Fig.8: ein einpolig dargestelltes Schaltschema einer dreiphasigen Ausführungsform der Schaltanlage nach der Erfindung in Ringbauweise,
- Fig.9: ein einpolig dargestelltes Schaltschema einer dreiphasigen Ausführungsform der Schaltanlage nach der Erfindung mit einer Doppelsammelschiene in Ring-Kreuzbauweise, und
- Fig. 10: ein einpolig dargestelltes Schaltschema einer dreiphasigen Ausführungsform der Schaltanlage nach der Erfindung in Ringbauweise mit angehängtem Doppelsammelschienenabzweig.

### WEGE ZUR AUSFÜHRUNG DER ERFINDUNG

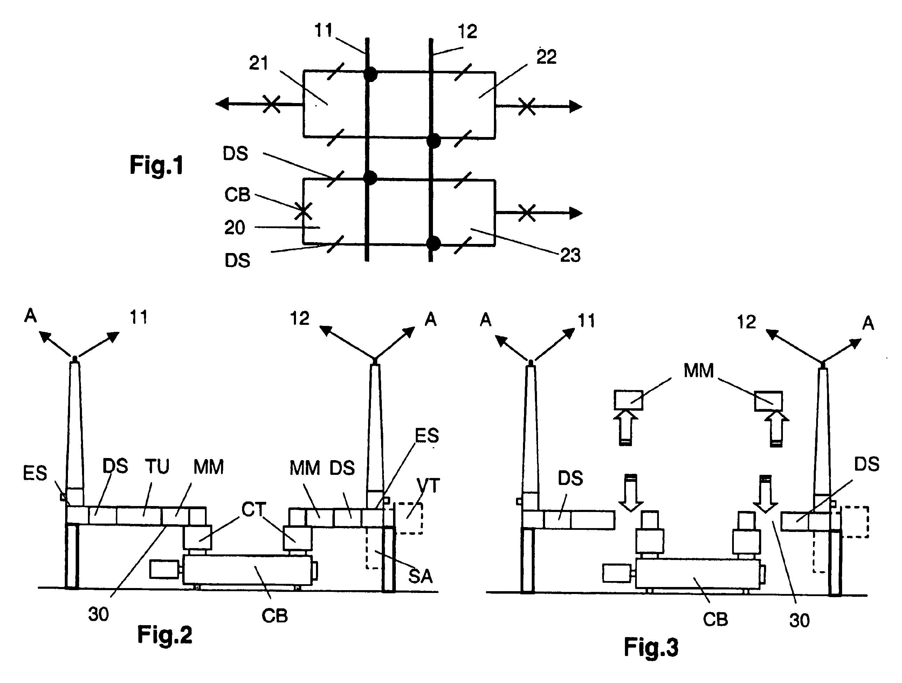

In allen Figuren bezeichnen gleiche Bezugszeichen auch gleichwirkende Teile. Die in den Figuren 1 bis 3 dargestellte Ausführungsform der Schaltanlage nach der Erfindung weist das aus Fig.1 ersichtliche Schaltschema auf und enthält zwei in Freiluftbauweise ausgebildete und in den Figuren 2 und 3 senkrecht zur Bildebene geführte Sammelschienen 11 und 12 sowie vier Schaltfelder, von denen drei jeweils als Abzweigfeld 21, 22 und 23 ausgebildet sind und eines ein Querkupplungsfeld 20 ist. Alle Schaltfelder weisen eine gekapselt und gasisoliert ausgeführte Schaltungsanordung auf, welche zwischen die beiden Sammelschienen 11 und 12 geschaltet ist. Eine im Querkupplungsfeld 20 enthaltene und mit dem Bezugszeichen 30 bezeichnete Schaltungsanordung ist in den Figuren 2 und 3 dargestellt. Wie aus den Figuren 2 und 3 zu entnehmen ist, ist die Schaltungsanordnung 30 ersichtlich modular aufgebaut und enthält ein als Leistungsschalter ausgeführtes Kapselungsmodul CB, zwei jeweils als Trennschalter ausgeführte Kapselungsmodule DS sowie zwei Montagemodule **MM**, welche jeweils zwischen einem der Trennschaltermodule DS und dem Leistungsschaltermodul CB angeordnet sind und die elektrische Verbindung zwischen den beiden Stromanschlüssen des Leistungsschalters CB und den beiden Trennschaltern DS sicherstellen.

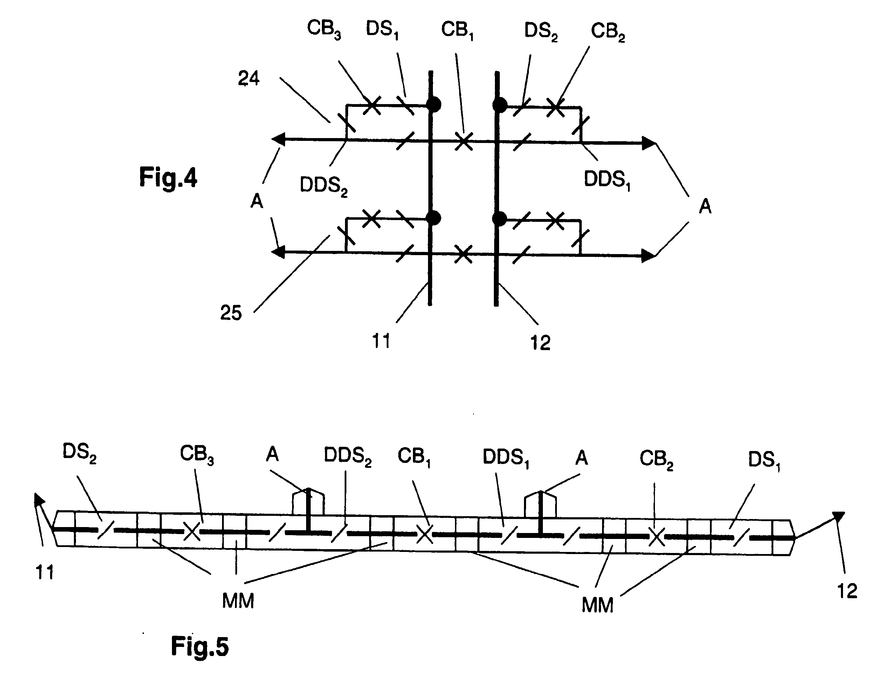

Dieselbe Anordnung wird auch für den in der Mitte angeordneten Zwischenschalter bei einer 1½-Schalterkonfiguration erreicht. Eine solche 1½-Schalterkonfiguration wird später noch in den Figuren 4 und 5 gezeigt. Der dem Schalter CB entsprechende Zwischenschalter ist dort mit CB₁ bezeichnet.

Beim Querkupplungsfeld nach den Figuren 2 und 3 sind vom Leistungsschalter CB abgewandten Stromanschlüsse der Trennschalter DS jeweils über eine nicht bezeichnete Freiluftdurchführung an eine beider Sammelschienen 11 bzw. 12 geführt, bei der 1½-Schalterkonfiguration gemäss den Figuren 4 und 5 entsprechend an zwei Abgänge A. Zwischen dem mit der Sammelschiene 11 verbundenen Trennschalter DS und einem der beiden Montagemodule **MM** ist zusätzlich ein rohrförmiges Verbindungsmodul TU angeordnet, welches die durch die Isolationsabstände in Luft vorgebenen grossen geometrischen Abmessungen des Schaltfeldes 20 kompensiert. Ersichtlich enthält die Schaltungsanordnung zusätzliche Module CT, ES, VT und SA, welcher der Reihe nach die Funktionen Stromwandeln, Erden, Spannungswandeln und Überspannungsbegrenzen ausführen.

Die Montagemodule **MM** entsprechen den aus der Technologie der gasisolierten Schaltanlagentechnik her bekannten und etwa in der Druckschrift Nr. CH-HS 1215 87 D "SF6-Gas-isolierte Schaltanlagen (GIS) Typ ELK" der Fa. BBC Brown Boveri AG Hochspannungstechnik, CH-5401 Baden Schweiz, 15 beschriebenen Querdemontageelementen ELK VQ, welche in gasisolierten Schaltanlagen zwischen einzelnen Abschnitten der Sammelschiene, langen Schienenverbindungen sowie bei Transformator- und Kabelanschlüssen eingebaut werden und durch axiale Verschiebbarkeit der Kapselung und des Leiterrohrs den Ausbau von Anlageteilen ermöglichen, ohne benachbarte Abschnitte zu demontieren.

Das Montagemodul **MM** weist einen abgeschlossenen und mit Isoliergas gefüllten Gasraum auf. Zum Ausbau einer schadhaften Komponente der Schaltungsanordnung 30, beispielsweise des Leistungsschaltermoduls CB, werden die beiden Montagemodule **MM** bei geöffneten Trennschaltern DS und geschlossenen Erdungsschaltern ES auf Erdpotential gebracht. Die Montagemodule **MM** können nun nach Abpumpen des Isoliergases axial verschoben und aus der Anlage entfernt werden. Die schadhafte Komponente CB kann sodann durch Querverschiebung aus der Anlage entfernt werden und durch eine neue Komponente ersetzt werden, ohne die Position der anderen Komponenten zu verändern. Nach Einbau der neuen Komponente und der Montagemodule **MM** kann so die volle Verfügbarkeit der Anlage rasch und kostengünstig wiederhergestellt werden. Je nach Anordnung der Komponente und Ausbildung der Montagemodule **MM** kann die Querdemontage bereits mit einem einzigen Montagemodul ausgeführt werden.

Wie vorstehend bereits beschrieben, weist die Schaltanlage nach den Figuren 4 und 5 zwei in Freiluftbauweise ausgeführte Sammelschienen 11 und 12 auf sowie zwei Schaltfelder 24 und 25, welche jeweils eine in 1½-Schalterkonfiguration ausgeführte gekapselte Schaltungsanordnung mit drei Leistungsschaltermodulen CB₁, CB₂ und CB₃ und zwei Abzweigen A enthalten. Eine dieser beiden gekapselten Schaltungsanordnungen ist in Fig.5 schematisch dargestellt. Diese Anordung enthält zwei Trennschaltermodule DDS₁ und DDS₂, welche jeweils über ein Montagemodule **MM** mit jeweils einem beider Anschlüsse eines in der Mitte der Anordnung vorgesehenen Leistungsschalters CB₁ verbunden sind. Die beiden Trennschaltermodule DDS₁ und DDS₂ sind jeweils nach Art eines T ausgebildet. Die beiden Arme des T weisen ersichtlich jeweils eine Trennschaltstelle auf. Das Bein des T enthält einen mit einem der beiden Abzweige A verbundenen Knotenpunkt. Das in der Mitte angeordnete Leistungsschaltermodul CB₁ ist über ein erstes Montagemodul **MM** mit dem nach links gerichteten Arm des T des Trennschaltermoduls DDS₁ und über ein zweites Montagemodul **MM** mit dem nach rechts gerichteten Arm des Trennschaltermoduls DDS₂ verbunden. Der nach rechts gerichtete Arm des T des Trennschaltermoduls DDS₁ ist über ein drittes Montagemodul **MM** mit dem Leistungsschaltermodul CB₂ verbunden, wohingegen der nach links gerichtete Arm T des zweiten Trennschaltermoduls DDS₂ über ein viertes Montagemodul **MM** mit dem Leistungsschaltermodul CB₃ verbunden ist. Zusätzlich sind ein fünftes und ein sechstes Montagemodul **MM** sowie ein der Sammelschiene 12 verbundenes Trennschaltermodul DS₁ und ein mit der Sammelschiene 11 verbundenes viertes Trennschaltermodul DS₂ vorgesehen und ist das fünfte Montagemodul zwischen dem Leistungsschaltermodul CB₂ und dem Trennschaltermodul DS₁ und das sechste Montagemodule zwischen dem Leistungsschaltermodul CB₃ und dem Trennschaltermodul DS₂ angeordnet. Je nach Bauweise der Anlage werden auch weniger als sechs Montagemodule **MM** benötigt, insbesondere dann, wenn eine axiale Demontage möglich ist.

Trotz des vergleichsweise komplizierten Aufbaus der gekapselten Schaltungsanordnung können somit auch bei dieser Schaltanlage alle störungsanfälligen Komponenten selektiv revidiert bzw. ausgetauscht werden, ohne bei der Revision auf andere Komponenten der Schaltungsanordnung Rücksicht nehmen zu müssen, und es kann so in bemerkenswert kurzer Zeit und mit geringem Montageaufwand wieder die volle Verfügbarkeit der Anlage erreicht werden.

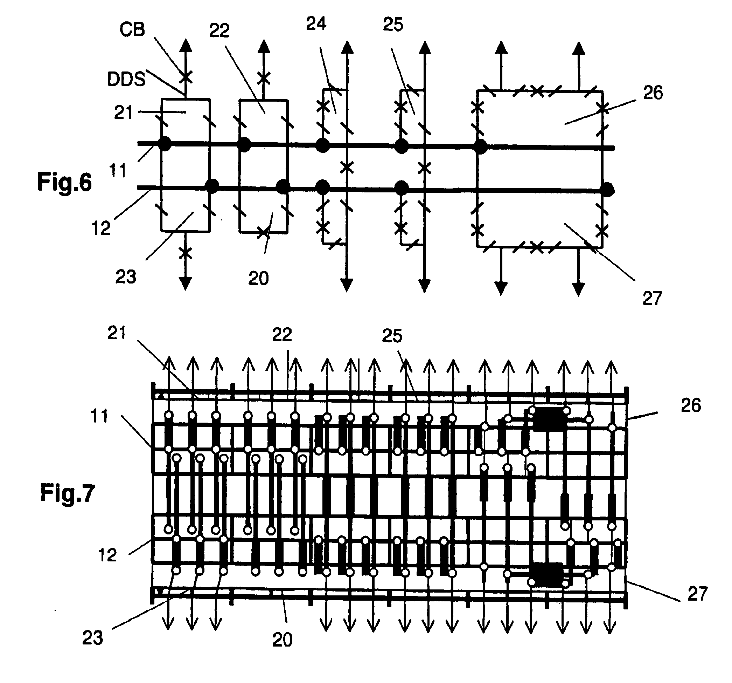

Die Schaltanlage nach den Figuren 6 und 7 weist zwei in Freiluftbauweise ausgeführte Sammelschienen 11 und 12 und acht Schaltfelder 20 bis 27 auf mit jeweils einer gekapselten Schaltungsanordnung. Die gekapselten Schaltungsanordnungen der Schaltfelder 21, 22 und 23 sind jeweils in Doppelsammelschienenkonfiguration ausgebildet, d. h. weisen ein mit einem Abzweig A und mit einem Trennschaltermodul DDS in T-Bauweise verbundenes Leistungsschaltersmodul CB auf, wobei die jeweils eine Trennstelle enthaltenden Arme des T jeweils mit je einer der beiden Sammelschienen 11 und 12 verbunden sind und das Bein des T mit dem Leistungsschaltermodul CB verbunden ist. Die Schaltfelder 24 bis 27 enthalten jeweils in 1½-Schalterkonfiguration ausgeführte gekapselte Schaltungsanordnungen, welche bei den Schaltfeldern 24 und 25 Längs- und bei den Schaltfeldern 26 und 27 U-Bauweise aufweisen. Die gekapselte Schaltungsanordnung des Schaltfelds 20 ist als Querkupplung ausgebildet. Eine solche Querkupplung ist prinzipiell nicht unbedingt erforderlich, da die Funktion der Querkupplung durch die 1½-Schalterkonfiguration der Abzweige 24 bis 27 wahrgenommen werden kann.

Dadurch, dass diese Schaltanlage unterschiedlich konfigurierte gekapselte Schaltungsanordnungen enthält, weist die Schaltanlage für die den unterschiedlichen Schaltungsanordnungen zugeordneten Abzweigfelder unterschiedliche Verfügbarkeiten auf, für die Schaltfelder 24 bis 27 eine höhere Verfügbarkeit als für die Schaltfelder 21 bis 23. Gegenüber einer Anlage nach dem Stand der Technik, bei der die Abzweige gleichartig ausgebildete gekapselte Schaltungsanordnungen aufweisen, kann so unter Zusicherung optimaler selektiver Verfügbarkeit die Schaltanlage wesentlich preiswerter gefertigt und gewartet werden.

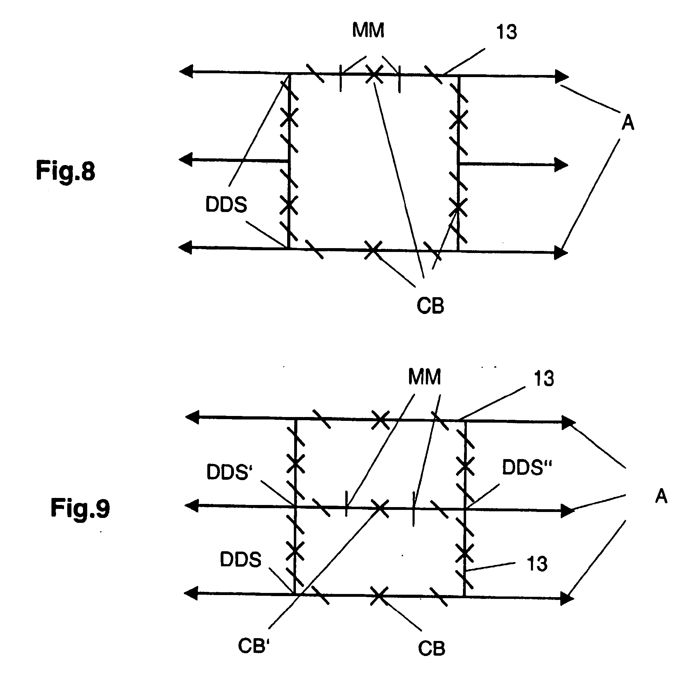

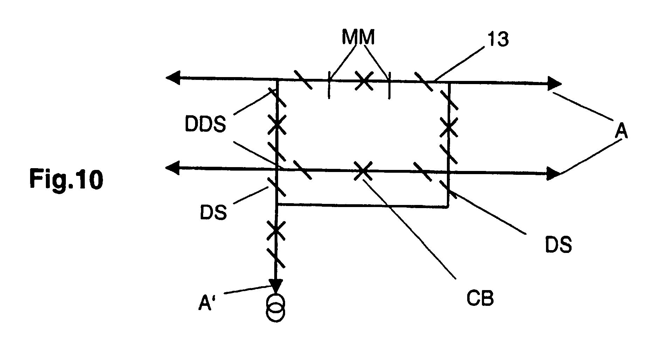

Die drei Schaltanlagen nach den Figuren 8 bis 10 weisen anstelle einer in Freiluftbauweise ausgeführten Sammelschiene eine gekapselt ausgeführte Ringkonfiguration 13 ohne explizite Sammelschiene auf, welche in die gekapselte Schaltungsanordnung integriert ist und im Ring wechselweise aufeinanderfolgende Leistungsschaltermodule CB und Trennschaltermodule DDS aufweist. Die Trennschaltermodule DDS sind in T-Bauweise ausgeführt, wobei der Fuss des T einen den Abzweig A anschliessenden Knotenpunkt enthält. Zwischen benachbarten und miteinander elektrisch leitend verbundenen Modulen ist jeweils ein Montagemodul **MM** angeordnet (in den Fig.8 und 10 lediglich beim zuoberst positionierten Leistungsschaltermodul CB dargestellt).

Bei der gegenüber der Schaltanlage gemäss Fig.8 erhöhte Verfügbarkeit aufweisenden Schaltanlage gemäss Fig.9 ist die gekapselte Schaltungsanordnung in Ring-Kreuzbauweise ausgeführt. Sie weist zusätzlich ein weiteres Leistungsschaltermodul CB' auf, welches über zwei Montagemodule **MM** verbunden ist mit zwei einander im Ring diagonal gegenüberliegenden Trennschaltermodulen DDS' und DDS" in Kreuzbauweise mit drei Trennschaltstellen und einem den Abzweig A anschliessenden Knotenpunkt.

In Fig. 10 ist eine Ausführungsform der Schaltanlage nach der Erfindung dargestellt, welche eine gekapselt ausgeführte Ringkonfiguration 13 aufweist, an die ein Doppelsammelschienenabzweig A' für eine nicht bezeichnete Einspeisung, beispielsweise einen Transformator, angehängt ist. Dabei greifen die beiden Trennerschaltmodule DS der Abzweigschaltung, welche normalerweise an der Doppelsammelschiene angeschlossen sind, auf die Trennerschaltermodule DDS der Ringkonfiguration 13 zu. Eine Umschaltung unter Last ist möglich, wenn der hierbei als Kupplungsschalter wirkende Verbindungsschalter CB der Ringkonfiguration 13 geschlossen ist.

### BEZUGSZEICHENLISTE

- 11, 12: Sammelschienen
- 13: Ringsammelschiene
- 20: Schaltfeld für Querkupplung
- 21 bis 27,: Schaltfelder für Abzweige
- 30: gekapselte Schaltungsanordnung
- CB, CB₁, CB₂, CB₃: Leistungsschaltermodule
- DS, DS₁, DS₂,: Trennschaltermodule
- DDS, DDS₁, DDS₂, DDS', DDS" **MM**: Montagemodul
- A, A': Abzweige
- ES: Erdermodul
- CT: Stromwandlermodul
- VT: Spannungswandlermodul
- SA: Überspannungsableitermodul

## Patentansprüche

1. Hochspannungsschaltanlage mit
mindestens einer in Freiluftbauweise ausgeführten Sammelschiene (11, 12), mindestens zwei mit der Sammelschiene verbindbaren Schaltfeldern (20, 21 bis 27), und
mindestens einer in einem der Schaltfelder angeordneten gekapselten, gasisolierten Schaltungsanordung (30) in Modulbauweise, enthaltend mindestens ein erstes Trennschaltermodul (DS, DS₁, DS₂, DDS, DDS₁, DDS₂, DDS', DDS" ) und mindestens ein erstes Leistungsschaltermodul (CB, CB', CS₁, CB₂, CB₃),
**dadurch gekennzeichnet, dass** zwischen dem ersten Trenn- und dem ersten Leistungsschaltermodul ein erstes Montagemodul (MM) angeordnet ist, wobei das erste Montagemodul (MM) eine axial verschiebbare Kapselung und einen axial verschiebbaren Leiter aufweist, damit das erste Montagemodul axial verschiebbar und aus der Hochspannungsschaltanlage entfernbar ist, und wodurch das mindestens eine ersten Trennschaltermodul (DS, DS₁, DS_{2,} DDS, DDS₁, DDS₂, DDS', DDS") oder das mindestens eine erste Leistungsschaltermodul (CB, CB', CB₁, CB₂, CB₃) sodann durch Querverschiebung aus der Hochspannungsschaltanlage entfernbar ist.

2. Hochspannungsschaltanlage nach Anspruch 1 mit mindestens zwei in Freiluftbauweise ausgeführten Sammelschienen (11, 12) und mit einer als Querkupplung ausgeführten gekapselten Schaltungsanordnung (30), bei der das erste Trennschaltermodul (DS) mit einer ersten (11) der beiden Sammelschienen und ein mit dem ersten Leistungsschaltermodul (CB) verbundenes zweites Trennschaltermodul (DS) mit der zweiten Sammelschiene (12) verbunden ist, **dadurch gekennzeichnet, dass** zwischen dem zweiten Trenn- und dem ersten Leistungsschaltermodul ein eine Querdemontage des Leistungsschalters ermöglichendes zweites Montagemodul (MM) angeordnet ist.

3. Hochspannungsschaltanlage nach Anspruch 1 mit mindestens zwei in Freiluftbauweise ausgeführten Sammelschienen (11, 12) und mit einer in 1½-Schalterkonfiguration ausgeführten gekapselten Schaltungsanordnung mit drei Leistungsschaltermodulen (CB₁, CB₂, CB₃) und zwei Abzweigen (A), bei der das erste und ein zweites Trennschaltermodul (DDS₁, DDS₂ ) nach Art eines T ausgebildet sind, dessen beide Arme jeweils eine Trennschaltstelle aufweisen und dessen Bein einen mit einem der beiden Abzweige (A) verbindbaren Knotenpunkt enthält,
**dadurch gekennzeichnet, dass** das erste Leistungsschaltermodul (CB₁, CB₂, CB₃) über das erste Montagemodul (MM) mit einem ersten Arm des T des ersten Trennschaltermoduls (DDS₁) und über ein zweites Montagemodul (MM) mit dem ersten Arm des T des zweiten Trennschaltermoduls (DDS₂) verbunden ist.

4. Hochspannungsschaltanlage nach Anspruch 3, **dadurch gekennzeichnet, dass** der zweite Arm des T des ersten Trennschaltermoduls (DDS₁) über ein drittes Montagemodul (MM) mit dem zweiten (CB₂ ) der drei Leistungsschaltermodule (CB₁, CB₂, CB₃) und der zweite Arm des T des zweiten Trennschaltermoduls (DDS₂) über ein viertes Montagemodul (MM) mit dem dritten Leistungsschaltermodul (CB₃) verbünden ist.

5. Hochspannungsschaltanlage nach Anspruch 4, **dadurch gekennzeichnet, dass** zusätzlich ein fünftes und ein sechstes Montagemodul (MM) sowie ein mit der ersten (12) der beiden Sammelschienen verbundenes drittes (DS₁) und ein mit der zweiten Sammelschiene (11) verbundenes viertes Trennschaltermodul (DS₂) vorgesehen sind, und dass das fünfte Montagemodul (MM) zwischen dem zweiten Leistungsschaltermodul (CB₂) und dem dritten Trennschaltermodul (DS₁) und das sechste Montagemodule (MM) zwischen dem dritten Leistungsschaltermodul (CB₃) und dem vierten Trennschaltermodul (DS₂) angeordnet sind.

6. Hochspannungsschaltanlage nach einem der Ansprüche 1 bis 5, mit mindestens zwei in Freiluftbauweise ausgeführten Sammelschienen (11, 12) und mit mindestens zwei in voneinander abweichenden Schaltfeldern (21 bis 27) angeordneten und jeweils mindestens einen Abzweig (A) enthaltenden Schaltungsanordnungen, **dadurch gekennzeichnet, dass** die Schaltungsanordnungen unterschiedliche Schaltungskonfigurationen aufweisen, und dass mindestens eine erste der Schaltungskonfigurationen gekapselt und gasisoliert ausgeführt ist.

7. Hochspannungsschaltanlage nach Anspruch 6, **dadurch gekennzeichnet, dass** die erste gekapselte Schaltungsanordnung in Doppelsammelschienen-oder 1½-Schalterkonfiguration ausgeführt ist.

8. Hochspannungsschaltanlage nach Anspruch 7, **dadurch gekennzeichnet, dass** eine zweite gekapselte Schaltungsanordnung vorgesehen ist, dass die erste gekapselte Schaltungsanordnung in 1½-Schalterkonfiguration und die zweite gekapselte Schaltungsanordnung in Doppelsammelschienenkonfiguration oder in einer von der ersten gekapselten Schaltungsanordnung abweichenden Bauweise der 1½-Schalterkonfiguration, insbesondere in Längs- oder in U-Bauweise, ausgeführt ist.

9. Hochspannungsschaltanlage nach Anspruch 1, bei der anstelle einer Sammelschiene eine Ringkonfiguration (13) vorgesehen ist, **dadurch gekennzeichnet, dass** die Ringkonfiguration (13) gekapselt ausgeführt und in der gekapselten Schaltungsanordnung enthalten ist.

10. Hochspannungsschaltanlage nach Anspruch 9, **dadurch gekennzeichnet, dass** die gekapselte Schaltungsanordnung in Ring-Kreuzbauweise ausgeführt ist.

11. Hochspannungsschaltanlage nach einem der Ansprüche 9 oder 10, **dadurch gekennzeichnet, dass** die gekapselte Schaltungsanordnung zusätzlich einen Doppelsammelschienenabzweig (A') aufweist.

## Claims

1. High-voltage substation having
at least one outdoor busbar (11, 12),
at least two substation sections (20, 21 to 27) which can be connected to the busbar, and
at least one encapsulated, gas-insulated, modular switchgear arrangement (30) which is arranged in one of the substation sections, containing
at least one first isolator module (DS, DS₁, DS₂, DDS, DDS₁, DDS₂, DDS', DDS" and at least one first circuit breaker module (CB, CB', CB₁, CB₂, CB₃) ,
**characterized in that** a first installation module (MM) is arranged between the first isolator module and the first circuit breaker module, wherein the first installation module (MM) has an axially movable encapsulation and an axially movable conductor in order that the first installation module is axially movable and can be removed from the high-voltage substation, and whereby the at least one first circuit isolator module (DS, DS₁, DS₂, DDS, DDS₁, DDS₂, DDS', DDS'')) or the at least one first circuit breaker module (CB, CB', CB₁, CB₂, CB₃) can then be removed from the high-voltage substation by lateral movement.

2. High-voltage substation according to Claim 1 having at least two outdoor busbars (11, 12) and having an encapsulated switchgear arrangement (30) which is in the form of a cross-coupling and in which the first isolator module (DS) is connected to a first (11) of the two busbars, and a second isolator module (DS), which is connected to the first circuit breaker module (CB), is connected to the second busbar (12), **characterized in that** a second installation module (MM), which allows lateral removal of the circuit breaker, is arranged between the second isolator module and the first circuit breaker module.

3. High-voltage substation according to Claim 1 having at least two outdoor busbars (11, 12) and having a 1½-switch configuration encapsulated switchgear arrangement with three circuit breaker modules (CB₁, CB₂, CB₃) and two branch circuits (A), in which the first and a second isolator module (DDS₁, DDS₂) are designed in the form of a T whose two arms each have one isolation point and whose leg contains a node which can be connected to one of the two branch circuits (A), **characterized in that** the first circuit breaker module (CB₁, CB₂, CB₃) is connected via the first installation module (MM) to a first arm of the T of the first isolator module (DDS₁) , and is connected via a second installation module (MM) to the first arm of the T of the second isolator module (DDS₂).

4. High-voltage substation according to Claim 3, **characterized in that** the second arm of the T of the first isolator module (DDS₁) is connected via a third installation module (MM) to the second (CB₂) of the three circuit breaker modules (CB₁, CB₂, CB₃) , and the second arm of the T of the second isolator module (DDS₂) is connected via a fourth installation module (MM) to the third circuit breaker module (CB₃).

5. High-voltage substation according to Claim 4, **characterized in that** a fifth and sixth installation module (MM) as well as third isolator module (DS₁) (which is connected to the first (12) of the two busbars) and a fourth isolator module (DS₂) (which is connected to the second busbar (11) are additionally provided, and **in that** the fifth installation module (MM) is arranged between the second circuit breaker module (CB₂) and the third isolator module (DS₁), and the sixth installation module (MM) is arranged between the third circuit breaker module (CB₃) and the fourth isolator module (DS₂).

6. High-voltage substation according to one of Claims 1 to 5, having at least two outdoor busbars (11, 12) and having at least two switchgear arrangements which are arranged in substation sections (21 to 27) which branch off from one another and each contain at least one branch circuit (A), **characterized in that** the switchgear arrangements have different switchgear configurations, and **in that** at least a first of the switchgear configurations is encapsulated and gas-insulated.

7. High-voltage substation according to Claim 6, **characterized in that** the first encapsulated switchgear arrangement has a double busbar or 1½ switch configuration.

8. High-voltage substation according to Claim 7, **characterized in that** a second encapsulated switchgear arrangement is provided, **in that** the first encapsulated switchgear arrangement has a 1½ switch configuration and the second encapsulated switchgear arrangement has a double busbar configuration, or is designed using a 1½switch configuration in particular in a longitudinal or U form, which differs from the first encapsulated switchgear arrangement.

9. High-voltage substation according to Claim 1, in which a ring configuration (13) is provided instead of a busbar, **characterized in that** the ring configuration (13) is encapsulated and is contained in the encapsulated switchgear arrangement.

10. High-voltage substation according to Claim 9, **characterized in that** the encapsulated switchgear arrangement is designed on a ring/crossed basis.

11. High-voltage substation according to one of Claims 9 or 10, **characterized in that** the encapsulated switchgear arrangement also has a double busbar branch circuit (A').

## Revendications

1. Poste à haute tension comprenant :
au moins une barre omnibus (11, 12) conçue pour une installation à l'air libre,
au moins deux baies de commutation (20, 21 à 27) qui peuvent être connectées aux barres omnibus, et
au moins un dispositif de commutation (30) encapsulé et isolé par un gaz, présentant une structure modulaire, disposé dans l'une des baies de commutation et contenant au moins un premier module de commutation d'isolation (DS, DS₁, DS₂, DDS, DDS₁, DDS₂, DDS', DDS") et au moins un premier module de commutation de puissance (CB, CB', CB₁, CB₂, CB₃) ,
**caractérisé en ce qu'**un premier module de montage (MM) est disposé entre le premier module de commutation d'isolation et le premier module de commutation de puissance, le premier module de montage (MM) comportant une encapsulation pouvant être décalée axialement et un conducteur pouvant être décalé axialement, de telle sorte que le premier module de montage puisse être décalé axialement et être retiré du poste à haute tension, cela permettant de retirer l'au moins un premier module de commutation d'isolation (DS, DS₁, DS₂, DDS, DDS₁, DDS₂, DDS', DDS") ou l'au moins un premier module de commutation de puissance (CB, CB', CB₁, CB₂, CB₃) du poste à haute tension par un décalage transversal.

2. Poste à haute tension selon la revendication 1, comprenant au moins deux barres omnibus (11, 12) conçues pour une installation à l'air libre et comprenant un dispositif de commutation (30) encapsulé réalisé sous la forme d'un couplage croisé, dans lequel le premier module de commutation de séparation (DS) est relié à une première (11) des deux barres omnibus et dans lequel un deuxième module de commutation de séparation (DS) relié au premier module de commutation de puissance (CB) est relié à la deuxième barre omnibus (12), **caractérisé en ce qu'**un deuxième module de montage (MM) permettant un démontage transversal du module de commutation de puissance est disposé entre le deuxième module de commutation de séparation et le premier module de commutation de puissance.

3. Poste à haute tension selon la revendication 1, comprenant au moins deux barres omnibus (11, 12) conçues pour une installation à l'air libre et comprenant un dispositif de commutation encapsulé réalisé sous la forme d'un disjoncteur de type 1 1/2 comportant trois modules de commutation de puissance (CB₁, CB₂, CB₃) et deux dérivations (A), dans lequel le premier et un deuxième modules de commutation de séparation (DDS₁, DDS₂) sont réalisés sous la forme d'un T dont les deux bras présentent chacun un point de séparation et dont la jambe comporte un noeud pouvant être relié à l'une des deux dérivations (A), **caractérisé en ce que** le premier module de commutation de puissance (CB₁, CB₂, CB₃) est relié par l'intermédiaire du premier module de montage (MM) à un premier bras du T du premier module de commutation de séparation (DDS₁) et par l'intermédiaire d'un deuxième module de montage (MM) au premier bras du T du deuxième module de commutation de séparation (DDS₂).

4. Poste à haute tension selon la revendication 3, **caractérisé en ce que** le deuxième bras du T du premier module de commutation de séparation (DDS₁) est relié par l'intermédiaire d'un troisième module de montage (MM) au deuxième (CB₂) des trois modules de commutation de puissance (CB₁, CB₂, CB₃) et **en ce que** le deuxième bras du T du deuxième module de commutation de séparation (DDS₂) est relié par l'intermédiaire d'un quatrième module de montage (MM) au troisième module de commutation de puissance (CB₃) .

5. Poste à haute tension selon la revendication 4, **caractérisé en ce qu'**il est en outre prévu un cinquième et un sixième modules de montage (MM) ainsi qu'un troisième module de commutation de séparation (DS₁) relié à la première (12) des deux barres omnibus et un quatrième module de commutation de séparation (DS₂) relié à la deuxième barre omnibus (11), et **en ce que** le cinquième module de montage (MM) est disposé entre le deuxième module de commutation de puissance (CB₂) et le troisième module de commutation de séparation (DS₁) et **en ce que** le sixième module de montage (MM) est disposé entre le troisième module de commutation de puissance (CB₃) et le quatrième module de commutation de séparation (DS₂).

6. Poste à haute tension selon l'une des revendications 1 à 5, comprenant au moins deux barres omnibus (11, 12) conçues pour une installation à l'air libre et comprenant au moins deux dispositifs de commutation disposés dans des baies de commutation (21 à 27) différentes les unes des autres et contenant chacune au moins une dérivation (A), **caractérisé en ce que** les dispositifs de commutation présentent différentes configurations de commutation, et **en ce qu'**au moins une première des configurations de commutation est réalisée sous une forme encapsulée et isolée par un gaz.

7. Poste à haute tension selon la revendication 6, **caractérisé en ce que** le premier dispositif de commutation encapsulé est conçu selon la configuration d'une double barre omnibus ou de disjoncteur de type 1 1/2.

8. Poste à haute tension selon la revendication 7, **caractérisé en ce qu'**il est prévu un deuxième dispositif de commutation encapsulé, **en ce que** le premier dispositif de commutation encapsulé est conçu selon la configuration d'un disjoncteur de type 1 1/2 et **en ce que** le deuxième dispositif de commutation encapsulé est conçu selon la configuration d'une double barre omnibus ou selon une configuration de disjoncteur de type 1 1/2 différente du premier dispositif de commutation encapsulé, notamment selon un mode de construction longitudinal ou en U.

9. Poste à haute tension selon la revendication 1, dans lequel il est prévu une configuration annulaire (13) au lieu d'une barre omnibus, **caractérisé en ce que** la configuration annulaire (13) est réalisée sous une forme encapsulée et est contenue dans le dispositif de commutation encapsulé.

10. Poste à haute tension selon la revendication 9, **caractérisé en ce que** le dispositif de commutation encapsulé est réalisé sous une forme en anneau et en croix.

11. Poste à haute tension selon l'une des revendications 9 ou 10, **caractérisé en ce que** le dispositif de commutation encapsulé présente en outre une dérivation (A') à double barre omnibus.
